# FASCICULE DE BREVET EUROPEEN

(11) **EP 1 800 741 B1**
(45) Date de publication et mention de la délivrance du brevet: **08.10.2008**
(21) Numéro de dépôt: 06291877.6
(22) Date de dépôt: 01.12.2006
(51) Int. Cl.: B01J 8/24, C10G 11/18

(54) **Dispositif de redistribution du catalyseur dans les risers de FCC**
Vorrichtung zur Neuverteilung des Katalysator in einem FCC-Steigrohr
Device for redistributing the catalyst in FCC risers

(30) Priorité: 21.12.2005 FR 0513065
(43) Date de publication de la demande: 27.06.2007
(73) Titulaire: Institut Français du Pétrole, 92852 Rueil Malmaison Cédex (FR)
(72) Inventeur: Patureaux, Thierry, 76290 Fontaine la Mallet (FR); Leroy, Patrick, 76430 Saint Vigor d'Ymonville (FR); Roux, Romain, 92500 Rueil Malmaison (FR)

(56) Documents cités:
- US-A- 3 026 186
- US-A- 3 353 925
- US-A- 4 818 372
- US-A- 5 622 677
- US-A1- 2002 112 988

## Description

### DOMAINE DE L'INVENTION

Le domaine de l'invention est celui des unités de craquage catalytique en lit fluidisé, notées en abrégé FCC, permettant essentiellement de transformer des coupes de type distillats sous vide, résidus atmosphérique ou sous vide, hydrotraités ou non, en base pour essence, gazole et LPG.

Elle s'applique également aux unités de craquage catalytique travaillant à haute sévérité en vue de maximiser le rendement en oléfines, unités désignées par l'homme du métier sous le terme de FCC pétrochimiques.

Les unités FCC, conventionnelles ou pétrochimiques, sont généralement constituées d'une zone réactionnelle de forme tubulaire allongée selon un axe sensiblement vertical appelé "riser" dans la terminologie anglo saxonne. On conservera dans la suite du texte la terminologie "riser" pour désigner la zone réactionnelle.

A la base du riser, la charge liquide est introduite à travers un ou une pluralité d'injecteurs qui la transforme en gouttelettes, puis ces gouttelettes sont vaporisées au contact du catalyseur chaud en provenance de la zone de régénération.

Les réactions de craquage ont lieu consécutivement à la vaporisation de la charge entre, d'une part la charge à l'état gazeux, et d'autre part le catalyseur en suspension entraîné par le flux réactionnel.

La conversion de la charge par la réaction de craquage est définie comme la quantité de charge ayant réagi sur la quantité de charge entrante, la quantité de charge ayant réagi étant elle même définie comme la charge entrante diminuée de la production de LCO (coupe pétrolière dont l'intervalle de distillation est compris entre 220°C et 360°C) et de la coupe "slurry" (coupe pétrolière dont la distillation commence à partir de 360°C).

Dans les unités FCC, le catalyseur est divisé sous forme de particules de diamètre typiquement compris entre 30 et 120 microns, avec une valeur moyenne située autour de 70 microns.

La désactivation du catalyseur dans la zone d'injection et de réaction est notamment due à la formation de coke sur la surface du catalyseur.

Dans certaines unités de FCC, l'injection de charge est suivie à une certaine distance au dessus du plan des injecteurs de charge, d'une injection d'un fluide inerte ou convertissant vis à vis des réactions de craquage, appelée injection MTC (abréviation de Mixed Temperature Control, qu'on peut traduire par moyen de contrôle de la température), qui a pour but de contrôler le profil de température dans la partie inférieure du riser.

Les injecteurs d'une unité de FCC sont généralement orientés vers le haut. Certaines unités de FCC possèdent des injecteurs dirigés vers le bas. La présente invention s'applique également à ce type d'unité.

### EXAMEN DE L'ART ANTERIEUR

Il est connu de l'homme du métier que la répartition du catalyseur à l'intérieur des risers de FCC n'est pas homogène. Dans chaque section du riser située dans la zone de vaporisation, le catalyseur est préférentiellement concentré à la paroi donnant lieu à une dépression vers le centre. On parle de modèle coeur- anneau pour représenter une telle distribution radiale inégale entre le centre du riser et les parois.

De plus, le catalyseur en paroi est soumis à un mouvement de redescente appelé rétromélange ou recirculation, qui a pour effet de remettre en contact du catalyseur ayant déjà rencontré la charge, donc en partie refroidi, avec de la charge fraîche. L'impact de ce rétromélange sur les réactions est négatif puisqu'il favorise le développement de réactions secondaires de surcraquage donnant lieu in fine à des produits lourds de condensation du type coke, et des gaz, ceci au détriment du rendement en essence, LPG et gazole.

Plusieurs dispositifs ou aménagements de la zone de vaporisation ont été étudiés pour lutter contre le phénomène de retromélange.

On peut citer le brevet US 3,353,925 qui divulgue une succession de zones de restriction appelées "contacteur venturi" réparties sur toute la longueur du riser (dans le texte cité le riser est dénommé "ligne de transfert") destinées à réduire le phénomène de rétromélange. Dans ce brevet, aucune information n'est donnée sur la forme et le degré de restriction apportés par les dits contacteurs venturi. Il est seulement dit que la vitesse de la suspension gaz solide au passage des restrictions est comprise entre 9 et 12 m/s en fonction de l'élévation dans le riser. Notre invention enseigne des formes et des niveaux de restriction chiffrés, et de plus, ne concerne que la zone de vaporisation et non pas l'ensemble du riser.

Plus récemment le brevet US 5,997,726 décrit une zone de mise en contact de la charge hydrocarbure avec le catalyseur applicable à des écoulements descendants comprenant une zone de restriction située au dessous du plan d'injection de la charge. Les écoulements descendants sont bien connus de l'homme du métier pour provoquer une diminution du rétromélange. De plus, dans la présente invention la zone de restriction est bien située au dessus du plan d'injection.

Le document US 2002/112988 décrit un dispositif situé à l'intérieur d'un riser d'unité de FCC et disposé au dessus des injecteurs, ayant une forme annulaire et conduisant à une réduction de section comprise entre 5 et 30%. Le taux de réduction de la section du riser dans la présente invention est nettement plus important que celui divulgué dans le document cité.

Le document US 3026186 décrit un réacteur présentant la forme d'un venturi, comprenant une injection principale orientée dans le sens longitudinal et des injections auxiliaires réparties radialement autour de l'injection principale. Ce document ne mentionne aucune injection située au dessus du niveau de l'injection principale.

Le document US 5622677 décrit un riser muni d'une pluralité de venturis connectés en série, chaque venturi étant défini par une portion convergente d'un angle défini, une restriction ( "throat") cylindrique d'une longueur et d'un diamètre défini et une portion divergente d'un angle défini. Ce document ne mentionne aucune position des venturis par rapport à l'injection principale, ni par rapport à une éventuelle injection secondaire distincte de l'injection principale.

Le document US 4818372 décrit une colonne munie de moyens d'injection de la charge situés à la base de ladite colonne et de moyens de refroidissement utilisant un fluide auxiliaire de refroidissement situés dans la partie supérieure de la colonne. A aucun moment il n'est dit ni même suggéré que la colonne pourrait présenter une quelconque restriction entre le niveau d'injection de la charge et le niveau d'injection du fluide de refroidissement., ni au dessus du niveau d'injection du fluide de refroidissement.

### DESCRIPTION SOMMAIRE DES FIGURES

La figure 1 donne la configuration générale de la zone d'injection d'une unité de FCC équipée du dispositif selon la présente invention.

Les figures 2b, 2c, 2d, 2e, 2f, 2g, et 2h illustrent de manière non limitative diverses formes du dispositif de redistribution selon l'invention.

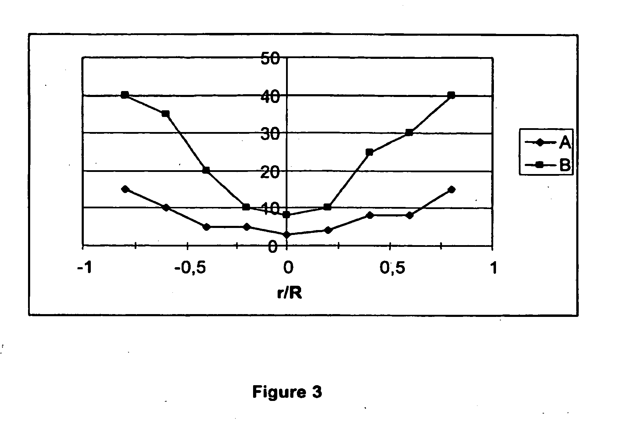

Les courbes A, B de la figure 3 montrent une comparaison des profils radiaux de flux de catalyseur avec et sans le dispositif de redistribution et servent à illustrer l'exemple comparatif.

### DESCRIPTION SOMMAIRE DE L'INVENTION

L'invention consiste en un dispositif de redistribution du catalyseur à l'intérieur de la zone réactionnelle d'une unité de craquage catalytique (appelée "riser" dans la terminologie de l'homme du métier) comportant des injecteurs de charge situés sur un premier plan et des injecteurs de MTC situés sur un second plan à un niveau plus élevé que le premier plan.

Par dispositif de redistribution, on entend un dispositif unique faisant le tour de la paroi interne du riser de manière continue et ininterrompue.

Dans une première variante de l'invention, le dispositif de redistribution du catalyseur selon l'invention est disposé dans la zone comprise entre le plan des injecteurs de charge et le plan des injecteurs de MTC.

Dans une seconde variante de l'invention, le dispositif de redistribution du catalyseur selon l'invention est situé à une hauteur comprise entre 0,1 et 5 mètres, et préférentiellement comprise entre 2 et 4 mètres au dessus du plan des injecteurs MTC.

On entend par plan des injecteurs de charge le plan sensiblement horizontal passant par l'intersection entre lesdits injecteurs et la paroi externe du riser. Comme en toute rigueur, cette intersection s'étend sur une certaine hauteur correspondant à la projection du diamètre de l'injecteur selon la paroi verticale du riser, on conviendra pour éviter toute ambiguïté, que le plan des injecteurs de charge est le plan passant par la mi hauteur de l'intersection précédemment définie. On définit de la même manière le plan des injecteurs MTC.

Enfin, selon une autre variante de la présente invention, il est possible d'installer deux systèmes de redistribution selon la présente invention, le premier situé entre le plan des injecteurs de charge et le plan des injecteurs MTC, et le second situé à une hauteur comprise entre 0,1 et 5 mètres au dessus du plan des injecteurs de MTC.

La section du dit dispositif de redistribution pourra avoir des formes très diverses, en partie ou intégralement rectiligne, et/ou en partie ou intégralement curviligne, dont certaines seulement seront illustrées, sans que cela constitue une quelconque limitation.

### DESCRIPTION DETAILLEE DE L'INVENTION

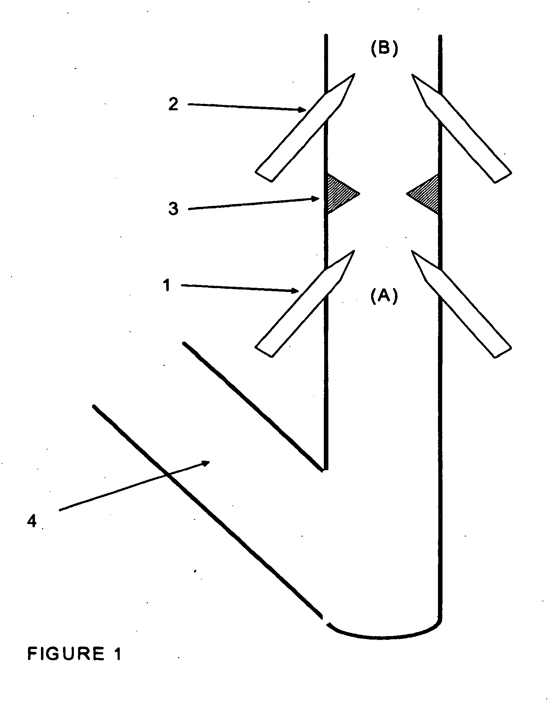

La présente description sera mieux comprise en suivant la figure 1.

La présente invention concerne un dispositif équipant la partie inférieure d'un riser de FCC de manière à améliorer la distribution radiale du catalyseur dans la dite zone. On appellera dans la suite du texte ce dispositif, dispositif de redistribution du catalyseur.

La partie inférieure d'un riser de FCC comprend classiquement une conduite d'arrivée du catalyseur (4) en provenance de la zone de régénération (non montrée sur la figure 1), une zone d'injection (A) comprenant un système d'injection de charge (1), et un système d'injection d'un fluide de contrôle de température appelé MTC (2) situés au dessus des injecteurs de charge.

La zone d'injection (A) appelée aussi zone d'accélération, ou encore zone de vaporisation, s'étend depuis le niveau d'injection de la charge, jusqu'à environ 4 à 5 mètres au dessus. Une seconde zone (B) faisant suite à la première dans le sens de l'écoulement des fluides réactionnels, s'étend jusqu'au sommet du riser.

La zone d'accélération (A) est caractérisée par des vitesses d'écoulement de gaz relativement faibles, de l'ordre de quelques mètres/seconde, et des densités de catalyseur élevées, tandis que la seconde zone (B) correspond à des vitesses de gaz pouvant atteindre 30 m/s, et des densités de catalyseur plus faibles que dans la zone d'accélération.

Les types d'écoulement sont très différents dans chacune des zones.

La zone d'accélération (A) présente de fortes recirculations de catalyseur, et est souvent assimilée à une zone de type "parfaitement agitée", alors que la seconde zone (B) se rapproche davantage d'un écoulement de type "piston".

Dans la zone d'accélération (A), les particules de catalyseur sont progressivement accélérées sous l'effet à la fois de la vaporisation de la charge qui génère un courant gazeux, et sous l'effet des réactions de craquage des gaz qui s'accompagnent d'une expansion molaire.

La présente invention s'applique à la zone d'accélération (A) d'un riser d'unité de FCC, et vise à homogénéiser la répartition du catalyseur au sein de la dite zone.

L'impact d'une répartition plus ou moins homogène du catalyseur au sein de la zone d'accélération est important, car la majeure partie des réactions s'y déroulent, et il convient d'éviter autant que possible le phénomène de "seconde rencontre" du catalyseur avec la charge.

Le terme de "seconde rencontre" désigne un contact entre la charge fraîche et du catalyseur partiellement désactivé par un dépôt de coke, puisque ayant déjà rencontré une première fois la charge, provenant de la recirculation du catalyseur en paroi.

Le catalyseur concentré en paroi redescend à contre-courant vers la zone d'injection de charge pour se mélanger au catalyseur frais. On parle de recirculation (ou de "backmixing") dans le langage de l'homme de métier. Ce type de contact est en grande partie responsable du développement de réactions parasites conduisant à la production de coke et de gaz.

Des mesures de densité du catalyseur effectuées dans la zone d'accélération du riser d'une unité FCC ont montré que le catalyseur a tendance à se répartir préférentiellement à la paroi du dit riser, tandis que le centre du riser est relativement appauvri en catalyseur. Le catalyseur concentré en paroi et insuffisamment accéléré recircule vers la zone d'injection de charge. Cette répartition inégale peut être combattue par des internes qui vont ramener le catalyseur de la périphérie vers le centre du riser et réduire les recirculations. Tel est l'objectif principal de la présente invention.

L'invention consiste donc en un dispositif de redistribution du catalyseur ayant la forme générale d'un anneau continu (3) attenant à la paroi du riser (R1) d'une unité FCC, situé dans la zone d'injection (A) et déterminant une section de passage réduite pour la suspension gaz solide en circulation, la dite section réduite ayant une valeur comprise entre 10 % et 70 % de la section du riser (R1), et préférentiellement comprise entre 30 % et 45% de la section du riser (R1).

Le dispositif de redistribution du catalyseur (3) sera positionné à une distance comprise entre 0,1 mètre et 5 mètres, et préférentiellement entre 2 mètres et 4 mètres au dessus du plan des injecteurs de charge (1).

Le système de redistribution du catalyseur sera avantageusement situé entre le plan des injecteurs de charge (1) et le plan des injecteurs de MTC (2).

Un deuxième dispositif de redistribution peut alors être situé au-dessus de l'injection de MTC de manière à obtenir l'effet de répartition plus homogène du catalyseur à la fois au niveau de la zone d'injection de charge, et au niveau de la zone de vaporisation du fluide utilisé pour les injecteurs MTC.

La forme du dispositif de redistribution (3) pourra varier de manière assez large, mais sera généralement d'un des types décrits ci après, en considération de la section du dit dispositif de redistribution.

Dans la suite de la description on parle de bord supérieur pour désigner le bord de la section du dispositif de redistribution situé au dessus du plan correspondant à la section réduite, et on parle de bord inférieur pour désigner le bord de la section du dispositif de redistribution situé au dessous du plan correspondant à la section réduite. De manière générale, les bords pourront être entièrement rectiligne, ou en partie rectiligne et en partie curviligne. Le bord supérieur pourra ou non être symétrique du bord inférieur.

Forme 1: de type rectiligne, le bord supérieur pouvant être plus grand ou plus petit que le bord inférieur.

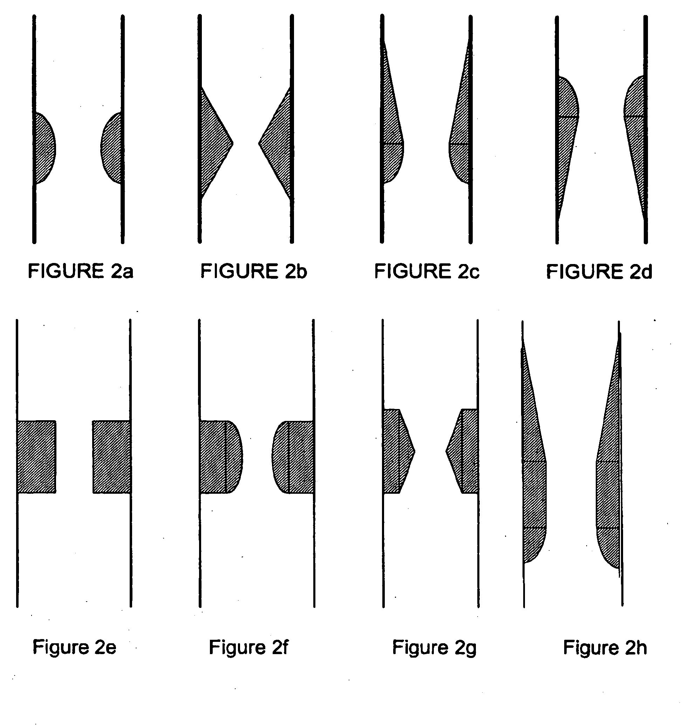

Cette forme est illustrée par la figure 2b qui montre une section triangulaire.

Une section rectangulaire, telle qu'illustrée par la figure 2e, ou plus généralement polygonale comme illustré sur la figure 2g, reste parfaitement dans le cadre de l'invention.

Forme 2: de type curviligne, cette forme désignant des bords de forme curviligne. Cette forme est illustrée par la figure 2a qui montre une section circulaire, non-conforme à l'invention.

Forme 3 : de type mixte, c'est à dire avec un bord supérieur rectiligne, et un bord inférieur curviligne, ou l'inverse, c'est à dire avec un bord supérieur curviligne et un bord inférieur rectiligne.

Cette forme est illustrée par les figures 2c et 2d.

Forme 4: Ce type regroupe des formes ayant des bords comportant à la fois une partie rectiligne et une partie curviligne. Ce type est illustré par la figure 2f qui montre un dispositif ayant un bord à la fois rectangulaire et curviligne. D'autres formes associant sur un même bord une partie curviligne et une partie rectiligne rentrent dans le cadre de l'invention. Une telle forme est illustrée par la figure 2h.

Les formes préférées sont la forme triangulaire (figure 2b), la forme rectangulaire (figure 2 e), et les formes illustrées par les figures 2c, 2d et 2h.

Ainsi selon une première variante, le dispositif de redistribution du catalyseur selon l'invention aura
une section de forme triangulaire.

Selon une variante, le dispositif de redistribution selon l'invention aura une section de forme rectangulaire.

Selon une variante, le dispositif de redistribution selon l'invention aura une section de forme rectangulaire puis circulaire.

Selon une variante, le dispositif de redistribution selon l'invention aura une section de forme rectangulaire puis triangulaire.

Selon une variante, le dispositif de redistribution selon l'invention aura une section de forme rectangulaire puis curviligne.

Selon une variante, le dispositif de redistribution selon l'invention aura une section de forme en partie curviligne et en partie rectiligne.

Le dispositif de redistribution selon l'invention devra résister autant que possible à l'érosion consécutive au frottement avec la suspension gaz solide, et sera pour cette raison réalisé dans un matériau dur, généralement du béton réfractaire, et de manière préférée, sera réalisé dans un béton réfractaire similaire à celui recouvrant la paroi interne du riser, et éventuellement renforcé par une armature métallique interne.

### EXEMPLE SELON L'INVENTION

Une expérimentation a été conduite sur une maquette reproduisant la circulation du catalyseur et des gaz à une échelle environ 1 / 5 de celle d'une unité industrielle de FCC.

Les dimensions principales de cette maquette ainsi que le débit de catalyseur et la vitesse de gaz dans le riser sont données ci dessous:
Hauteur du riser: 15 mètres
Diamètre interne du riser : 0,3 m
Débit de catalyseur compris entre 30 tonnes/heure et 60 tonnes/heure
Vitesse du gaz comprise entre 5 m/s et 12 m/s
Flux de catalyseur compris entre 115 et 235 kg/m2.s
Le catalyseur est constitué de particules de diamètre moyen 72 microns, présentant une répartition granulométrique avec un pourcentage de particules inférieures à 40 microns égal à 15 % poids.

La masse volumique des particules de catalyseur est de 1250 kg/m3.

La charge est injecté à travers deux injecteurs diamétralement opposés, situés conventionnellement au plan de côte 0 qui délivrent des gouttelettes d'environ 100 microns de diamètre.

Deux injecteurs de MTC sont situés sur un plan supérieur à 1 mètre au dessus du plan des injecteurs de charge.

Les mesures de flux de catalyseur ont été faites avec et sans dispositif de redistribution de redistribution, de manière à apprécier son effet sur la répartition radiale du catalyseur.

Pour cela, on a utilisé une canne de prélèvement, dite "isocinétique", de 8 mm de diamètre intérieur, qui permet de récupérer des échantillons de catalyseur à une côte verticale déterminée le long du riser, et à différents niveaux de profondeur repérés par le paramètre r/R qui a été fixé aux valeurs suivantes:
-1; -0,8; -0,6; -0,4; -0,2; 0; 0,2; 0,4; 0,6; 0,8 et 1.

La position r/R= 0 correspond au centre du riser. Les position r/R = 1 et r/R = -1 correspondent à la paroi du riser. Les autres positions sont des positions à des profondeurs intermédiaires.

L'ensemble des positions permet de balayer la section considérée du riser selon un diamètre complet.

En ordonnée sur la courbe de la figure 3 on a représenté des valeurs +10%, +20%, +30%, +40%, +50% par rapport à la valeur du flux au centre du riser (r/R =0).

Le dispositif de redistribution est un anneau de section triangulaire faisant tout le tour de la paroi du riser. La distance séparant la paroi du riser de la pointe du triangle est de 5 cm et détermine une section réduite du riser de 44,4 %.

Le dispositif de redistribution est placé entre à 0,58 mètre au dessus du plan des injecteurs, soit entre le plan des injecteurs de charge et le plan des injecteurs de MTC. Cette distance de 0,58 mètre correspond approximativement à une hauteur de 3 mètres au dessus du plan des injecteurs dans une unité industrielle ayant un riser de 1,5 mètre de diamètre.

Les courbes A (avec dispositif de redistribution) et B (sans dispositif de redistribution) de la figure 3 représentent respectivement la répartition radiale du catalyseur avec et sans dispositif de redistribution, prises à la côte 400 mm au dessus du niveau des injecteurs.

Le flux de catalyseur est exprimé en kg/m2.s rapporté au flux minimum qui se situe au centre du riser dans la configuration avec dispositif de redistribution.

La courbe B (sans dispositif de redistribution) montre un flux de catalyseur inhomogène, très nettement supérieur à proximité de la paroi du riser.

Par comparaison des courbes A et B, l'effet d'aplatissement de la répartition du catalyseur du au dispositif de redistribution est très nettement visible. Il en résulte une probabilité de contact avec la charge vaporisée issue des injecteurs beaucoup plus homogène sur la section du riser dans le cas avec dispositif de redistribution (courbe A).

De même, le flux moyen de catalyseur avec dispositif de redistribution (moyenne courbe A) est inférieur au flux moyen de catalyseur sans dispositif de redistribution (moyenne courbe B), ce qui, pour les mêmes conditions opératoires, met en évidence une très nette diminution des recirculations de catalyseur partiellement désactivé vers la zone d'injection de charge dans le cas avec dispositif de redistribution (courbe A).

In fine, une conversion plus importante en produits recherchés est obtenue, notamment l'essence et le gazole.

Les courbes A et B de la figure 3 ont été obtenues à une vitesse de gaz de 5m/s, et un débit de catalyseur de 33 tonnes /h correspondant à un flux moyen de catalyseur de 130 kg/m2.s.

La vitesse de gaz Vg = 5m/s est représentative de la vitesse réelle du gaz dans la zone de vaporisation d'une unité industrielle qui, rappelons le, varie à la fois en raison de la vaporisation de la charge et de la réaction de craquage (par l'expansion molaire).

Ces résultats expérimentaux démontrent la meilleure homogénéité de la distribution du catalyseur dans la zone d'injection, et la diminution du rétromélange apporté par le dispositif de redistribution, qui se traduisent par une amélioration de la conversion pouvant être estimée à environ 1 % poids.

L'effet de meilleure homogénéisation et de réduction du rétromélange provient de la combinaison des caractéristiques du dispositif de redistribution à savoir, sa forme annulaire, sa position entre le plan des injecteurs de charge et le plan des injecteurs de MTC, et le niveau de restriction de la section du riser soit 44,4 %.

D'autres formes de la section du dispositif de redistribution ont été testées, notamment une forme comportant une partie rectiligne et une partie curviligne telle que représentée sur les figures 2c et 2f . Ces formes conduisent au même effet d'aplatissement du profil radial de flux, sans qu'une forme particulière conduise à des performances nettement meilleures par rapport aux autres. La forme triangulaire est la plus simple à réaliser.

## Revendications

1. Dispositif de redistribution du catalyseur à l'intérieur de la zone réactionnelle d'une unité de craquage catalytique muni d'injecteurs de charge, et sur un plan plus élevé, d'injecteurs de MTC, ledit dispositif ayant la forme générale d'un anneau continu attenant à la paroi du riser et faisant le tour de ladite paroi, ledit dispositif créant une restriction de la section de riser comprise entre 30% et 45%, possédant une section de profil au moins en partie rectiligne, et étant disposé a) soit dans la zone comprise entre le plan des injecteurs de charge et le plan des injecteurs de MTC, b) soit à une hauteur comprise entre 0,1 et 5 mètres au dessus du plan des injecteurs MTC.

2. Dispositif de redistribution du catalyseur à l'intérieur de la zone réactionnelle d'une unité de craquage catalytique muni d'injecteurs de charge, et sur un plan plus élevé d'injecteurs MTC, selon la revendication 1, **caractérisé par** la présence de deux dispositifs, le premier dispositif étant situé entre le plan des injecteurs de charge et le plan des injecteurs MTC, et le second dispositif étant situé à une hauteur comprise entre 0,1 et 5 mètres et préférentiellement comprise entre 2 et 4 mètres au dessus du plan des injecteurs de MTC.

3. Dispositif de redistribution du catalyseur à l'intérieur de la zone réactionnelle d'une unité de FCC selon l'une quelconque des revendications 1 à 2, **caractérisé en ce que** la section du dispositif de redistribution a une section de forme triangulaire.

4. Dispositif de redistribution du catalyseur à l'intérieur de la zone réactionnelle d'une unité de FCC selon l'une quelconque des revendications 1 à 2, **caractérisé en ce que** la section du dispositif de redistribution a une section de forme rectangulaire.

5. Dispositif de redistribution du catalyseur à l'intérieur de la zone réactionnelle d'une unité de FCC selon l'une quelconque des revendications 1 à 2, **caractérisé en ce que** la section du dispositif de redistribution a une section de forme rectangulaire puis circulaire.

6. Dispositif de redistribution du catalyseur à l'intérieur de la zone réactionnelle d'une unité de FCC selon l'une quelconque des revendications 1 à 2, **caractérisé en ce que** la section du dispositif de redistribution a une section de forme rectangulaire puis triangulaire.

7. Dispositif de redistribution du catalyseur à l'intérieur de la zone réactionnelle d'une unité de FCC selon l'une quelconque des revendications 1 à 2, **caractérisé en ce que** la section du dispositif de redistribution a une section de forme rectangulaire puis curviligne.

8. Dispositif de redistribution du catalyseur à l'intérieur de la zone réactionnelle d'une unité de FCC selon l'une quelconque des revendications 1 à 2, **caractérisé en ce que** la section du dispositif de redistribution a une section de forme mixte, c'est à dire en partie curviligne et en partie rectiligne.

9. Dispositif de redistribution du catalyseur à l'intérieur de la zone réactionnelle d'une unité de FCC selon l'une quelconque des revendications 1 à 8, **caractérisé en ce que** le dispositif de redistribution est réalisé dans un béton réfractaire similaire à celui utilisé pour revêtir la paroi interne du riser.

## Claims

1. Device for redistribution of the catalyst inside the reaction zone of a catalytic cracking unit that is equipped with feedstock injectors, and, on a higher plane, MTC injectors, whereby said device has the general shape of a continuous ring that reaches the riser wall and goes around said wall, said device creating a restriction in the cross section of the riser ranging between 30% and 45%, having a profile section at least partially rectilinear, and being located a) either in the zone encompassed between the plane of the feedstock injectors and the plane of the MTC injectors, b) either at a height of between 0.1 and 5 meters above the plane of the MTC injectors.

2. Device for redistribution of the catalyst inside the reaction zone of a catalytic cracking unit that is equipped with feedstock injectors, and on a upper plane with MTC injectors, **characterized by** the presence of two devices, the first one being located between the plane of the feedstock injectors and the plane of the MTC injectors, and the second one being located at a height of between 0.1 and 5 meters, and preferably between 2 and 4 meters above the plane of the MTC injectors.

3. Device for redistribution of the catalyst inside the reaction zone of a catalytic cracking unit according to any one of claims 1 to 2, in which the profile section of the redistribution device is of triangular shape.

4. Device for redistribution of the catalyst inside the reaction zone of an FCC unit according to any of claims 1 to 2, **characterized in that** the profile section of the redistribution device is of rectangular shape.

5. Device for redistribution of the catalyst inside the reaction zone of an FCC unit according to any of claims 1 to 2, **characterized in that** the profile section of the redistribution device is rectangular in a first portion and circular in a second portion.

6. Device for redistribution of the catalyst inside the reaction zone of an FCC unit according to any of claims 1 to 2, wherein the section of the redistribution device has a profile section that is rectangular in a fist portion and triangular in a second portion.

7. Device for redistribution of the catalyst inside the reaction zone of an FCC unit according to any of claims 1 to 2, wherein the section of the redistribution device has a section that is rectangular in a first portion and curvilinear in a second portion.

8. Device for redistribution of the catalyst inside the reaction zone of an FCC unit according to any of claims 1 to 2, wherein the section of the redistribution device has a section of mixed shape, i.e., with a curvilinear portion and a rectilinear portion.

9. Device for redistribution of the catalyst inside the reaction zone of an FCC unit according to any of claims 1 to 8, wherein the redistribution device is made of a refractory concrete that is similar to the one used to coat the inside riser wall.

## Patentansprüche

1. Vorrichtung zur Umverteilung des Katalysators innerhalb der Reaktionszone einer Einheit zum katalytischen Cracken, die mit Beschickungsinjektoren, und auf einer höheren Ebene, mit MTC-Injektoren ausgestattet ist, wobei die Vorrichtung die allgemeine Form eines geschlossenen Rings aufweist, der an der Wand des Steigrohrs anliegt, und an dieser Wand rundherum geht, wobei die Vorrichtung eine Verengung des Steigrohrquerschnitts im Bereich zwischen 30 % und 45 % erzeugt, der einen Querschnitt besitzt, der mindestens teilweise geradlinig ist, und a) entweder in der Zone im Bereich zwischen der Ebene der Beschickungsinjektoren und der Ebene der MTC-Injektoren, oder b) in einer Höhe im Bereich zwischen 0,1 und 5 Metern über der Ebene der MTC-Injektoren angeordnet ist.

2. Vorrichtung zur Umverteilung des Katalysators innerhalb der Reaktionszone einer Einheit zum katalytischen Cracken, die mit Beschickungsinjektoren, und auf einer höheren Ebene mit MTC-Injektoren ausgestattet ist, nach Anspruch 1, **gekennzeichnet durch** die Gegenwart von zwei Vorrichtungen, wobei die erste Vorrichtung zwischen der Ebene der Beschickungsinjektoren und der Ebene der MTC-Injektoren liegt, und die zweite Vorrichtung in einer Höhe im Bereich zwischen 0,1 und 5 Metern, und vorzugsweise im Bereich zwischen 2 und 4 Metern über der Ebene der MTC-Injektoren liegt.

3. Vorrichtung zur Umverteilung des Katalysator innerhalb der Reaktionszone einer FCC-Einheit nach einem der Ansprüche 1 bis 2, **dadurch gekennzeichnet, dass** der Querschnitt der Vorrichtung zur Umverteilung einen Querschnitt in dreieckiger Form aufweist.

4. Vorrichtung zur Umverteilung des Katalysator innerhalb der Reaktionszone einer FCC-Einheit nach einem der Ansprüche 1 bis 2, **dadurch gekennzeichnet, dass** der Querschnitt der Vorrichtung zur Umverteilung einen Querschnitt in geradliniger Form aufweist.

5. Vorrichtung zur Umverteilung des Katalysator innerhalb der Reaktionszone einer FCC-Einheit nach einem der Ansprüche 1 bis 2, **dadurch gekennzeichnet, dass** der Querschnitt der Vorrichtung zur Umverteilung einen Querschnitt in geradliniger, dann kreisrunder Form aufweist.

6. Vorrichtung zur Umverteilung des Katalysator innerhalb der Reaktionszone einer FCC-Einheit nach einem der Ansprüche 1 bis 2, **dadurch gekennzeichnet, dass** der Querschnitt der Vorrichtung zur Umverteilung einen Querschnitt in geradliniger, dann dreieckiger Form aufweist.

7. Vorrichtung zur Umverteilung des Katalysator innerhalb der Reaktionszone einer FCC-Einheit nach einem der Ansprüche 1 bis 2, **dadurch gekennzeichnet, dass** der Querschnitt der Vorrichtung zur Umverteilung einen Querschnitt in geradliniger, dann krummliniger Form aufweist.

8. Vorrichtung zur Umverteilung des Katalysator innerhalb der Reaktionszone einer FCC-Einheit nach einem der Ansprüche 1 bis 2, **dadurch gekennzeichnet, dass** der Querschnitt der Vorrichtung zur Umverteilung einen Querschnitt in gemischter, das heißt in teilweise krummliniger und teilweise geradliniger Form aufweist.

9. Vorrichtung zur Umverteilung des Katalysator innerhalb der Reaktionszone einer FCC-Einheit nach einem der Ansprüche 1 bis 8, **dadurch gekennzeichnet, dass** die Vorrichtung zur Umverteilung aus einem feuerfesten Beton ausgeführt wird, ähnlich dem, der verwendet wurde, um die Innenwand des Steigrohrs auszukleiden.
